## Europäisches Patentamt

## European Patent Office

## Office européen des brevets

(19)

(11) Veröffentlichungsnummer: **0 151 433**
**B1**

(12) **EUROPÄISCHE PATENTSCHRIFT**

(45) Veröffentlichungstag der Patentschrift:
**11.05.88**

(51) Int. Cl.⁴: **H 04 Q 11/04**, H 04 M 11/06

(21) Anmeldenummer: **85100666.8**

(22) Anmeldetag: **23.01.85**

(54) **Gerätekonfiguration im Teilnehmerbereich eines ISDN-Netzes.**

(30) Priorität: **28.01.84 DE 3402978**

(43) Veröffentlichungstag der Anmeldung:
**14.08.85 Patentblatt 85/33**

(45) Bekanntmachung des Hinweises auf die Patenterteilung:
**11.05.88 Patentblatt 88/19**

(84) Benannte Vertragsstaaten:
**AT BE CH DE FR GB IT LI NL SE**

(56) Entgegenhaltungen:
**FR - A - 2 472 319**

**IEEE TRANSACTIONS ON COMMUNICATIONS, Band COM-30, Nr. 9, September 1982, Seiten 2137-2142, New York, US; J.M. GRIFFITHS: "ISDN network terminating equipment"**
**GLOBECOM '82 IEEE GLOBAL TELECOMMUNICATIONS CONFERENCE, Miami, US, 29. November - 2. Dezember 1982, Band 2, Papier D.2.4, Seiten 757-761; R. PARODI u.a.: "D-Channel protocol: Role, requirements, level 2 implications"**
**GLOBECOM '82 IEEE GLOBAL TELECOMMUNICATIONS CONFERENCE, Miami, US, 29. November - 2. Dezember 1982, Band 3, Papier F.2.3, Seiten 1210-1214; R. LUEDER: "An implementation scheme for ISDN multi-service subscriber access"**

(73) Patentinhaber: **Philips Kommunikations Industrie AG, Thurn-und-Taxis-Strasse 10, D-8500 Nürnberg 10 (DE)**
Patentinhaber: **Standard Elektrik Lorenz Aktiengesellschaft, Hellmuth-Hirth-Strasse 42, D-7000 Stuttgart 40 (DE)**

(72) Erfinder: **Besier, Horst, Gross-Gerauer-Strasse 34 D, D-6108 Weiterstadt (DE)**
Erfinder: **Stolp, Karl-Heinz, Neue Strasse 6, D-6107 Reinheim 2 (-Überau) (DE)**

(74) Vertreter: **Villinger, Bernhard, Dipl.-Ing. et al, Standard Elektrik Lorenz AG Patent- und Lizenzwesen Postfach 30 09 29, D-7000 Stuttgart 30 (DE)**

(56) Entgegenhaltungen: (Fortsetzung)
**PROCEEDINGS OF THE NATIONAL ELECTRONICS CONFERENCE, Band 36, 1982, Seiten 181-186, Oak Brook, Illinois, US; I. KAWASHIMA u.a.: "Terminal control equipment for integrated telecommunications services"**

## Beschreibung

Die Erfindung betrifft eine Gerätekonfiguration im Teilnehmerbereich eines ISDN-Netzes. (Die Abkürzung ISDN bedeutet Integrated Services Digital Network.)

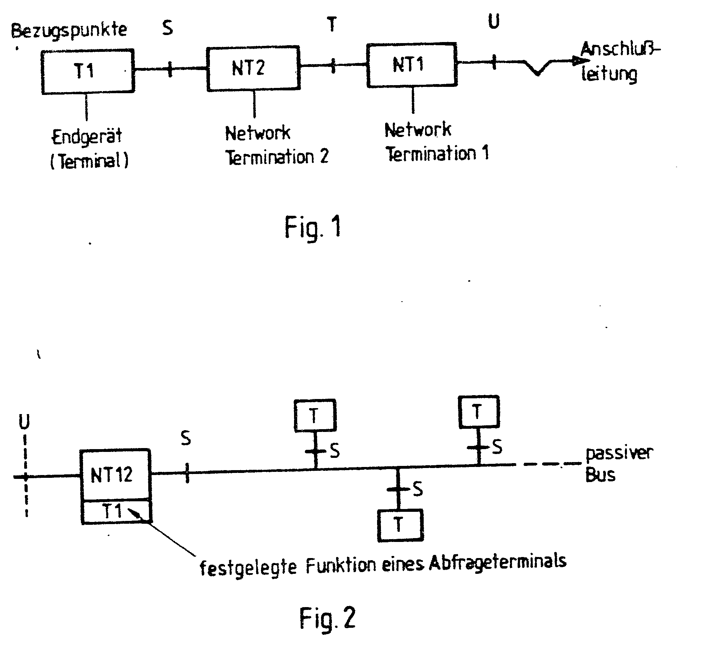

Im Zuge von internationalen Vereinbarungen im Rahmen der CEPT bzw. des CCITT hat man für den Teilnehmerbereich in diesem künftigen ISDN-Netz die in Figur 1 schematisch dargestellten Funktionseinheiten und Bezugspunkte definiert. Dem Endgerät T1 des jeweiligen Teilnehmers folgt der Bezugspunkt S, danach eine Netzabschlusseinheit NT2 mit dem Bezugspunkt T und danach eine weitere Netzabschlusseinheit NT1 mit dem Bezugspunkt U. An den Bezugspunkten S, T, U beträgt die Nettobitrate 144 kbit/s, aufgeteilt nach dem Schema B+B+D, wobei B = 64 kbit/s (vorgesehen für Sprache/ Daten) und D = 16 kbit/s (vorgesehen primär für Signalisierung) sind. Je nach Anzahl der Endgeräte und der Konfiguration beim Teilnehmer ist es auch möglich, die Netzabschlusseinheiten NT1 und NT2 zu einer Netzabschlusseinheit NT12 zusammenzufassen.

Für die nähere Ausbildung der Gerätekonfiguration bestehen verschiedene Möglichkeiten. So ist es bereits bekannt, jedes Fernsprechendgerät neben der ihm zugeordneten Netzabschlusseinheit mit einer zweiten, mit der ersten identischen Netzabschlusseinheit zu versehen. An die interne zweite Netzabschlusseinheit können dann ein Zweitapparat, eine Reihenanlage oder andere Zusatzeinrichtungen angeschlossen werden. Zu diesem Zwecke enthält jedes Fernsprechendgerät neben der zweiten Netzabschlusseinheit eine Verarbeitungseinheit (DE-AS 29 17 570). Eine solche Konfiguration bedeutet einen erheblichen technischen Aufwand im gesamten Endstellenbereich, weil auch jeder Zweitapparat zum Zwecke der Vereinheitlichung der Schnittstellen mit einer Verarbeitungseinheit ausgestattet sein muss, die er bei einer festen Zuordnung als Zweitapparat nie benötigt.

Aus GLOBECOM '82 IEEE GLOBAL TELE-COMMUNICATIONS CONFERENCE, Miami, US, 29. November – 2. Dezember 1982, Band 3, Papier F 2.3, Seiten 1210–1214, sind verschiedene Gerätekonfigurationen bekannt, bei denen die in Figur 1 dargestellten Funktionseinheiten NT1, NT2 und T1 in einem oder zwei Geräten zusammengefasst sind, wobei dann auf die genormten Schnittstellen an den Bezugspunkten S oder T verzichtet werden kann. Auf Seite 1211 wird unter Punkt 2.2.1 ein einzelnes ISDN-Telefon beschrieben, bei dem die Funktionseinheiten NT1, NT2 und T1 in einem Gerät zusammengefasst sind, bei dem aber dennoch die Schnittstelle am Bezugspunkt S (S-Schnittstelle) für andere Anwendungen zugänglich ist. Die vorliegende Erfindung geht von dieser Geräteanordnung aus.

In IEEE TRANSACTIONS ON COMMUNICA-TIONS, Band COM-30, Nr. 9, September 1982, Seiten 2137–2142, wird im Abschnitt VIII auf Seite 2140 eine ähnliche Gerätekonfiguration beschrieben. Endgeräte mit Schnittstellen nach X.21, X.21 bis oder V.24 können über Adapter und einen Bus an ein Gerät angeschlossen werden, das die Funktionseinheiten NT1, NT2 und T1 in sich vereinigt. Der Anschluss erfolgt nicht über eine der genormten Schnittstellen S oder T; diese sind auch innerhalb des Geräts nicht realisiert.

In GLOBECOM '82 IEEE GLOBAL TELECOM-MUNICATIONS CONFERENCE, Miami, US, 29. November – 2. Dezember 1982, Band 2, Papier D 2.4, Seiten 757–761, wird auf Seite 759, rechte Spalte, darauf hingewiesen, dass die Netzabschlusseinheit so ausgebildet sein kann, dass ein Internverkehr möglich ist.

Der erfindungsgemässen Aufgabe ging die Überlegung voraus, dass für die Abwicklung der Kennzeichengabe im D-Kanal mittels eines Kennzeichengabeprotokolls die Endgeräte (Fernsprecher, Teletext, Datenendgerät, Telefax usw.) mit einem Mikroprozessor ausgestattet sein müssen. Dieser Mikroprozessor hat noch genügend freie Rechenkapazität, um weitere Steuerungsfunktionen übernehmen zu können.

Die Erfindung hat die Aufgabe, eine Vereinfachung der Gerätekonfiguration zu erzielen, die gleichzeitig eine grössere Anzahl von Leistungsmerkmalen ermöglicht.

Diese Aufgabe wird bei einer Gerätekonfiguration im Teilnehmerbereich eines ISDN-Netzes mit wenigstens einer Netzabschlusseinheit, die mit einem Fernsprechendgerät kombiniert ist, welches für die Kennzeichengabe in einem 16-kbit/s-Kennzeichengabekanal mit einem Mikroprozessor ausgestattet ist, und die auf der einen Seite zum gleichzeitigen Betrieb zweier Endgeräte über zwei Kanäle mit je 64 kbit/s und den Kennzeichengabekanal am Teilnehmernetz liegt und die auf der anderen Seite an einem passiven Bus liegt, an dem mehrere Endgeräte mit ihren jeweiligen S-Schnittstellen angeschaltet werden können, dadurch gelöst, dass das Fernsprechendgerät als Abfrageeinheit ausgebildet ist und dass die für die Steuerung der vorgesehenen Funktionen der Netzabschlusseinheit erforderlichen intelligenten Schaltungen und der Mikroprozessor im Fernsprechendgerät derart kombiniert sind, dass der Mikroprozessor für die Funktion der Netzabschlusseinheit mitverwendet wird und dass der Mikroprozessor so programmiert ist, dass die über den passiven Bus anschaltbaren Endgeräte einen vom Amtsverkehr unabhängigen Internverkehr mit der Möglichkeit der Rückfrage mit/ohne Gesprächsumleitung und des Mithörens bzw. Mitsprechens über eine digitale Zuordnungsmatrix zulassen, welche (in bekannter Weise) die digitalen Sprachsignale beider Übertragungseinrichtungen addiert.

Durch die Erfindung ergibt sich eine Vereinfachung der Gerätekonfiguration und eine grössere Anzahl von Leistungsmerkmalen als bei einer Verwendung einer oder mehrerer getrennter Netzabschlusseinheiten.

Im folgenden wird die Erfindung anhand mehrerer Blockschaltbilder näher dargestellt. Es zeigen

Fig. 1 die bereits behandelte Gerätekonfiguration nach dem Stande der Technik

Fig. 2 die grundsätzliche Gerätekonfiguration nach der Erfindung

Im Gegensatz zu der in Fig. 1 dargestellten und bereits eingangs behandelten Konfiguration mit zwei getrennten in Serie vor das Endgerät T1 geschalteten Netzabschlusseinheiten NT2 und NT1 ist in Fig. 2 eine mit dem ersten Endgerät T1 kombinierte Netzabschlusseinheit NT12 vorgesehen. Diese Netzabschlusseinheit enthält einen Mikroprozessor, der neben der Kennzeichengabe genügend Kapazität aufweist, um weitere Steuerungsfunktionen für einen bedarfsweise vorsehbaren Internverkehr vornehmen zu können. Diese Netzabschlusseinheit NT12 liegt dazu auf der einen Seite mit ihrer Schnittstelle U am Teilnehmernetz, auf der anderen Seite mit ihrer S-Schnittstelle an einem passiven Bus, an dem mehrere Endgeräte T mit ihren jeweiligen S-Schnittstellen angeschaltet werden können.

Auf diesem passiven Bus ist dann z.B. Internverkehr mit einem der über S-Schnittstellen angeschlossenen Endgeräte T möglich. Das mit der Netzabschlusseinheit NT12 verbundene Endgerät T1 funktioniert dabei als Abfragestation. Dabei ist sichergestellt, dass diese Abfragestation T1 aus dem Fernmeldenetz zentral gespeist wird und bei Ausfall der lokalen Stromversorgung für die übrigen Endgeräte T weiter betrieben werden kann.

Durch eine in der Netzabschlusseinheit NT2 vorgesehene Zuordnungsmatrix kann wahlweise die Funktion Mithören durch Addition der digitalen Sprachsignale beider Übertragungsrichtungen oder Mitsprechen durch Addition des digitalen Sprachsignals des in das Gespräch eintretenden Teilnehmers zu den Sprachsignalen beider Übertragungsrichtungen verwirklicht werden. Diese Art der Addition digitaler Sprachsignale ist bereits bei Konferenzschalteinrichtungen als sogenannte Konferenzsummeneinrichtung bekannt (siehe hierzu DE-OS 28 11 466, DE-OS 29 35 662, DE-OS 29 35 663, DE-OS 29 35 664 und DE-OS 32 14 152).

## Patentanspruch

1. Gerätekonfiguration im Teilnehmerbereich eines ISDN-Netzes mit wenigstens einer Netzabschlusseinheit (NT12), die mit einem Fernsprechendgerät (T1) kombiniert ist, welches für die Kennzeichengabe in einem 16-kbit/s-Kennzeichengabekanal (D-Kanal) mit einem Mikroprozessor ausgestattet ist, und die auf der einen Seite zum gleichzeitigen Betrieb zweier Endgeräte (T1, T) über zwei Kanäle mit je 64 kbit/s (B-Kanäle) und den Kennzeichengabekanal am Teilnehmernetz (Schnittstelle U) liegt, und die auf der anderen Seite (S-Schnittstelle) an einem passiven Bus liegt, an dem mehrere Endgeräte (T) mit ihren jeweiligen S-Schnittstellen angeschaltet werden können, dadurch gekennzeichnet, dass das Fernsprechendgerät (T1) als Abfrageeinheit ausgebildet ist und dass die für die Steuerung der vorgesehenen Funktionen der Netzabschlusseinheit (NT12) erforderlichen intelligenten Schaltungen und der Mikroprozessor im Fernsprechendgerät (T1) derart kombiniert sind, dass der Mikroprozessor für die Funktion der Netzabschlusseinheit mitverwendet wird und dass der Mikroprozessor so programmiert ist, dass die über den passiven Bus anschaltbaren Endgeräte (T) einen vom Amtsverkehr unabhängigen Internverkehr mit der Möglichkeit der Rückfrage mit/ohne Gesprächsumleitung und des Mithörens bzw. Mitsprechens über eine digitale Zuordnungsmatrix zulassen, welche die digitalen Sprachsignale beider Übertragungseinrichtungen addiert.

## Revendication

1. Configuration d'équipement chez l'abonné dans un réseau numérique à intégration de services (RNIS) comprenant au moins une unité de terminaison de réseau (NT12), combinée avec un équipement téléphonique (T1), lequel est pourvu d'un microprocesseur pour la signalisation dans un canal de signalisation (canal D) à 16 kbit/s, et connectée, d'un côté, à deux équipements terminaux (T1, T) fonctionnant simultanément, par deux canaux à 64 kbit/s chacun (canaux B) et le canal de signalisation du réseau d'abonné (interface U) et, de l'autre côté, à un bus passif, auquel plusieurs équipements terminaux (T) peuvent être connectés par leurs interfaces S respectives, caractérisée en ce que l'équipement téléphonique (T1) est conçu comme une unité d'opératrice et en ce que les circuits intelligents nécessaires à la conduite des fonctions prévues pour l'unité de terminaison de réseau (NT12) et le microprocesseur de l'équipement téléphonique (T1) sont combinés de manière que le microprocesseur est aussi utilisé pour les fonctions de l'unité de terminaison de réseau et en ce que le microprocesseur est programmé de telle sorte que les équipements terminaux pouvant être connectés au bus passif admettent un trafic interne indépendant du trafic du central, avec possibilité de rappel, avec ou sans connexion en tiers, écoute ou insertion, par une matrice d'affectation numérique, laquelle ajoute les signaux de parole numériques dans les deux sens de transmission.

## Claim

1. Equipment configuration in the subscriber area of an ISDN network with at least one network terminal (NT12) which is combined with a telephone terminal (T1) which is equipped with a microprocessor for signalling in a 16-kbit/s signalling channel (channel D) and which is connected on the one side, for simultaneous operation of two terminals (T1, T), to the subscriber network (interface U) via two channels each at 64 kbit/s (channels B) and the signalling channel and which is connected on the other side (interface S) to a passive bus to which several terminals (T) can be connected each with their own interface S, characterized in that the telephone terminal (T1) is designed as an operator's telephone set and that the intelligent circuits necessary for the control of the planned functions of the network terminal (NT12) and the microprocessor in the telephone terminal (T1) are combined in such a way that the microprocessor ist involved in the operation of the network terminal and that the microprocessor ist programmed in such a way that the terminals (T) which are connectable via the passive bus permit an internal traffic independent of the exchange traffic with the possibility of interrogation with/without call diversion and of monitoring or participation in speaking via a digital allocation matrix which adds together the digital speech signals of both directions of transmission.

$$- \frac{1}{1} -$$

Bezugspunkte    S        T        U

T1     NT2     NT1     Anschluß-leitung

Endgerät (Terminal)     Network Termination 2     Network Termination 1

Fig. 1

U      S     T     T

NT12     S     S

T1     S     passiver Bus

T

festgelegte Funktion eines Abfrageterminals

Fig. 2